# EUROPÄISCHE PATENTSCHRIFT

(11) **EP 3 341 150 B1**
(45) Veröffentlichungstag und Bekanntmachung des Hinweises auf die Patenterteilung: **15.04.2020**
(21) Anmeldenummer: 16756692.6
(22) Anmeldetag: 24.08.2016
(51) Int. Cl.: B23D 77/02

(54) **MASCHINENWERKZEUG, INSBESONDERE REIBWERKZEUG ZUR FEINBEARBEITUNG VON BOHRUNGEN**
MACHINE TOOL, IN PARTICULAR REAMING TOOL FOR THE FINE MACHINING OF BORES
MACHINE-OUTIL, NOTAMMENT ALÉSOIR POUR L'USINAGE FIN DE TROUS

(30) Priorität: 25.08.2015 DE 102015216203
(43) Veröffentlichungstag der Anmeldung: 04.07.2018
(73) Patentinhaber: Komet Group GmbH, 74354 Besigheim (DE)
(72) Erfinder: COLLETTA, Cristian, 71254 Ditzingen (DE); BIERL, Wolfgang, 74363 Güglingen (DE); NÄGELE, Simone, 74394 Hessigheim (DE); DUBS, Waldemar, 70806 Kornwestheim (DE); PETERS, Frederik, 70176 Stuttgart (DE); LEUZE, Peter, 74399 Walheim (DE)
(74) Vertreter: Pfiz, Thomas
(86) Internationale Anmeldenummer: PCT/EP2016/069938
(87) Internationale Veröffentlichungsnummer: WO 2017/032781

(56) Entgegenhaltungen:
- WO-A2-2010/056021
- DE-A1- 3 135 964
- DE-A1-102006 028 729
- FR-A1- 2 660 887
- GB-A- 2 032 820
- US-A1- 2010 135 735

## Beschreibung

Die Erfindung betrifft ein Maschinenwerkzeug, insbesondere Reibwerkzeug zur Feinbearbeitung von Bohrungen, mit einem eine Werkzeugachse aufweisenden, relativ zu einem zu bearbeitenden Werkstück rotierenden Werkzeughalter und mehreren an dem Werkzeughalter wechselbar angebrachten Schneidplatten, deren aktive Schneidkanten einen zu der Werkzeugachse koaxialen gemeinsamen Schneidkreis besitzen. Ein derartiges Maschinenwerkzeug ist beispielsweise aus der DE 31 35 964 A1 zu entnehmen.

Reiben ist ein spanabhebendes Bearbeitungsverfahren mit geometrisch bestimmter Schneide, wobei im Gegensatz zum Voll- oder Aufbohren nur mit kleinen Spanungsquerschnitten in stets vorbearbeiteten Bohrungen gearbeitet wird. Die abzuspanenden Aufmaße bzw. Reibzugaben im Durchmesser liegen typischerweise im Bereich von 0,1 bis 0,5 mm. Ein Reibwerkzeug soll eine hohe Bohrungsqualität über viele Bauteile gewährleisten, mit möglichst geringen Toleranzen im Durchmesser sowie in der Form und Lage der Bohrung und deren Rauheit. Um die Maßgenauigkeit der Bohrung im Bereich weniger Mikrometer einzuhalten, werden Reibwerkzeuge individuell an die Bearbeitungsaufgabe angepasst. Diese Genauigkeit kann im Allgemeinen durch exakt definiertes Schleifen von fest mit dem Werkzeughalter verbundenen Schneidkörpern erreicht werden. Um die Performance zu steigern, hat es sich auch bewährt, die Schneidkörper zu beschichten, wobei lösbare Schneidkörper dann nach dem Schleifen für das Beschichten wieder abmontiert und danach wieder in ihrem Heimatplattensitz montiert werden, um die erforderlichen Toleranzen zu halten. Nach dem Standzeitende muss eine Neubestückung des Maschinenwerkzeugs mit neuen Schneidkörpern nach dem oben beschriebenen Ablauf stattfinden. Der Handlings-, Reinigungs- und Logistikaufwand ist dadurch sehr hoch. Individuell einstellbare Plattensitze könnten zwar die Toleranzen ausgleichen, jedoch ist der Herstellungsaufwand solcher Verstelleinrichtungen und das Einstellen jeder einzelnen Schneidplatte aufwändig.

Ausgehend hiervon liegt der Erfindung die Aufgabe zugrunde, die im Stand der Technik bekannten Maschinenwerkzeuge weiter zu verbessern und die Positionierung von wechselbaren Schneidplatten exakt und mit vergleichsweise geringem Aufwand zu ermöglichen.

Zur Lösung dieser Aufgabe wird die in im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, anstelle individuell geformter Plattensitze eine geometrisch einfache Grundform für alle Schneidplatten gemeinsam bereitzustellen. Dementsprechend wird erfindungsgemäß vorgeschlagen, dass der Werkzeughalter einen um die Werkzeugachse umlaufenden zylinderartigen Plattensitzmantel zur radialen Positionierung der Schneidplatten aufweist, wobei die Schneidplatten mindestens eine in Anlage mit dem Plattensitzmantel bringbare Anlageseite aufweisen. Durch den zylinderartigen Plattensitzmantel wird eine umlaufende, konvex gekrümmte Zylinderfläche zur Anlage der Schneidplatten bereitgestellt. Damit ist es möglich, auch für Maschinenwerkzeuge zum Reiben geringe Positioniertoleranzen einzuhalten, ohne dass eine individuelle Zuordnung zwischen Schneidplatte und Heimatplattensitz erforderlich wäre.

Der Plattensitzmantel besitzt die geometrische Form einer allgemeinen Zylinderfläche, die sich unverzerrt in die Ebene abwickeln lässt. Eine solche allgemeine Zylinderfläche wird durch Parallelverschiebung einer Geraden längs einer Leitkurve definiert.

Eine weitere vorteilhafte Ausgestaltung sieht vor, dass der Plattensitzmantel eine ungleichmäßig gekrümmte Ringkontur aufweist. Damit ist es möglich, durch eine Verschiebung in Umfangsrichtung längs der Ringkontur eine Durchmessertoleranz auszugleichen. Alternativ ist es auch vorteilhaft, wenn der Plattensitzmantel eine gleichmäßig gekrümmte (kreisförmige) Ringkontur aufweist. In diesem Fall ist es möglich, einen exakten Schneidkreis unabhängig von der Winkelposition bzw. deren Fehler einzuhalten.

Besonders vorteilhaft ist es, wenn der Plattensitzmantel als Schlifffläche vorzugsweise durch Rundschleifen gebildet ist, so dass Toleranzen im µm-Bereich fertigungstechnisch eingehalten werden können.

Vorteilhafterweise bildet der Plattensitzmantel als einheitliche Positionierfläche eine Mehrzahl von über seinen Umfang verteilte Plattensitze für die Schneidplatten, wobei die Schneidplatten ohne feste Zuordnung auf die Plattensitze wahlweise verteilbar sind.

Eine weitere herstellungstechnische Vereinfachung sieht vor, dass die Schneidplatten mit ihren Schneidkanten gesondert von dem Werkzeughalter gefertigt sind.

Günstig ist es auch, wenn die Schneidplatten jeweils mehrere Schneidkanten aufweisen, so dass sich die Standzeit entsprechend erhöhen lässt.

Um eine definierte Positionshaltung mit einfachen Mitteln sicherzustellen, ist es von Vorteil, wenn die Schneidplatten unter der Kraft einer Schraubverbindung gegen den Plattensitzmantel gepresst sind.

In diesem Zusammenhang ist es auch günstig, wenn zumindest eine Kraftkomponente der Schraubverbindung durch einen axialen Versatz zwischen einem Schraubenloch und einem Schraubgewinde einer Klemmschraube gebildet ist, so dass eine mehrachsige Festlegung möglich ist.

Eine besonders einfache Variante sieht vor, dass die Schneidplatten jeweils mittels einer Klemmschraube direkt an dem Werkzeughalter angeschraubt sind.

Alternativ ist es auch möglich, dass die Schneidplatten durch an dem Werkzeughalter angeschraubte Klemmstücke gegen den Plattensitzmantel geklemmt sind. In diesem Fall sind auch keine Durchgangslöcher in den Schneidplatten erforderlich.

Um auf einfache Weise auch eine Drehmomentmitnahme zu ermöglichen, ist es vorteilhaft, wenn die in Umfangsrichtung des Plattensitzmantels abwechselnd angeordneten Schneidplatten und Klemmstücke sich zu einer Ringstruktur ergänzen.

Eine Zusatzfunktion lässt sich dadurch realisieren, dass die Klemmstücke an einer mit den Schneidplatten in Eingriff stehenden Spannfläche eine Tasche zur Aufnahme einer nicht aktiven Schneidkante der mehrschneidigen Schneidplatten besitzen, so dass die unbenutzte Schneidkante auch vor bei der Bearbeitung entstehenden Spänen geschützt bleibt.

Ein weiterer Einsatzvorteil ergibt sich dadurch, dass die Klemmstücke einen Kanal zur Kühlmitteldurchführung zu den Schneidplatten aufweisen.

Um eine exakt definierte, kippfreie Abstützung zu gewährleisten, weisen die Schneidplatten an ihren Anlageseiten jeweils zwei bezüglich der Werkzeugachse in einem Winkelabstand voneinander liegende, vorzugsweise punkt- oder linienförmige Anlagestellen zur Anlage an dem Plattensitzmantel auf.

Solche voneinander beabstandete Anlagestellen lassen sich dadurch freistellen, dass die Schneidplatten an ihren Anlageseiten jeweils eine parallel zur Werkzeugachse verlaufende, insbesondere nutartige Freisparung aufweisen.

Zur Mitnahme von Drehmomenten bzw. Übertragung von Schneidkräften ist es vorteilhaft, wenn die Schneidplatten an jeweils mindestens einem an dem Werkzeughalter verankerten oder ausgebildeten Widerlager außerhalb des Plattensitzmantels einzeln abgestützt sind.

Eine weitere Verbesserung sieht vor, dass der Werkzeughalter eine den Plattensitzmantel umgebende, in einer Radialebene der Werkzeugachse liegende Ringschulter zur axialen Abstützung der Schneidplatten aufweist.

In einer herstellungstechnisch besonders vorteilhaften Ausgestaltung ist der Plattensitzmantel durch einen zylindrischen oder hohlzylindrischen Stirnfortsatz des Werkzeughalters gebildet.

Im Folgenden wird die Erfindung anhand der in der Zeichnung schematisch dargestellten Ausführungsbeispiele näher erläutert. Es zeigen:
- Fig. 1: ein Reibwerkzeug mit einem zylinderförmigen Plattensitzmantel und daran positionierten Schneidplatten in perspektivischer Darstellung;
- Fig. 2: eine Schneidplatte des Reibwerkzeugs nach Fig. 1 in vergrößerter Darstellung;
- Fig. 3 und 4: weitere Ausführungsbeispiele von Schneidplatten;
- Fig. 5: eine zweite Ausführungsform eines Reibwerkzeugs in abgeschnittener perspektivischer Ansicht;
- Fig. 6: eine Ausschnittsvergrößerung des in Fig. 5 markierten Bereichs;
- Fig. 7: eine dritte Ausführungsform eines Reibwerkzeugs in abgeschnittener perspektivischer Ansicht;
- Fig. 8: den Werkzeughalter des Reibwerkzeugs nach Fig. 7 ohne Schneidplatten und Klemmelemente;
- Fig. 9: eine vierte Ausführungsform eines Reibwerkzeugs in perspektivischer Ansicht;
- Fig. 10: den Werkzeughalter des Reibwerkzeugs nach Fig. 9 in Stirnansicht.

Die in der Zeichnung dargestellten Reibwerkzeuge 10 lassen sich für die Feinbearbeitung einer vorgefertigter Bohrung in einem Werkstück mittels einer Werkzeugmaschine um eine Werkzeugachse 12 rotierend antreiben und dabei axial vorschieben, um eine Reibzugabe spanabhebend abzutragen und so eine passgenaue Bohrung mit hoher Oberflächengüte zu erzeugen. Die Werkzeugachse kann jedoch auch eine Rotationsachse für ein Werkstück sein, das zur Bearbeitung mit einem stillstehenden Maschinenwerkzeug um die Werkzeugachse rotierend bewegt wird.

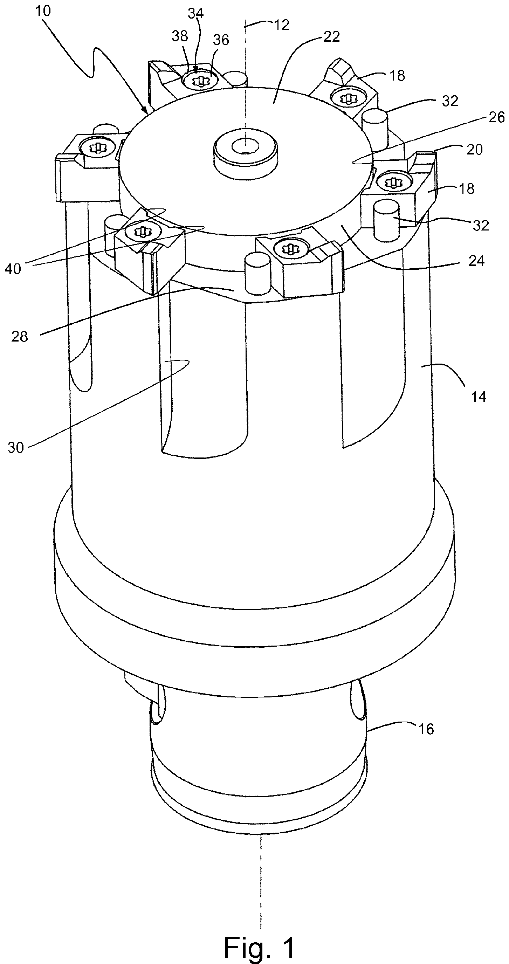

Wie in Fig. 1 gezeigt, weist das Reibwerkzeug 10 einen der Grundform nach zylindrischen Werkzeughalter 14 auf, der an seinem hinteren Ende über eine Kupplung 16 mit einer an eine Maschinenspindel anschließbare Aufnahme verbindbar ist. Am vorderen Ende des Werkzeughalters bzw. Werkzeugrundkörpers 14 ist eine Mehrzahl von Schneidplatten 18 in Umfangsrichtung verteilt angebracht. Die radial äußeren aktiven Schneidkanten 20 dieser Schneidplatten 18 laufen auf einem zu der Werkzeugachse 12 koaxialen gemeinsamen Schneidkreis um. Zur exakten radialen Positionierung der Schneidplatten 18 ist an dem Werkzeughalter 14 ein Stirnfortsatz 22 vorgesehen, der umfangsseitig einen um die Werkzeugachse 12 umlaufenden zylindrischen Plattensitzmantel 24 mit einer stetig konvex gekrümmten Zylinderfläche bildet. Die Schneidplatten 18 liegen dabei mit einer Anlageseite 26 gegen den Plattensitzmantel 24 bzw. dessen Zylinderfläche an, wie es weiter unten näher beschrieben wird.

In Fig. 1 besitzt der Plattensitzmantel 24 eine kreiszylindrische Form. Grundsätzlich sind auch allgemeine Zylinderflächen als Plattensitzmantel einsetzbar, beispielsweise auch solche, deren erzeugende Kurve bzw. Leitkurve stückweise verschieden gekrümmt oder ein Polygon ist. Die geometrische Besonderheit einer Zylinderfläche besteht allgemein darin, dass sie eine Regelfläche ist, die unverzerrt in die Ebene abgewickelt werden kann. Denkbar ist es auch, dass der in der Grundform zylinderartige Plattensitzmantel 24 zwischen den vorgesehenen Plattensitzen mit Aussparungen versehen ist, beispielsweise um eine nicht aktive Schneidkante freizustellen.

In dem gezeigten Beispiel eines senkrechten Kreiszylinders lässt sich der Plattensitzmantel 24 als Schlifffläche durch Rundschleifen auf einen hochgenau definierten Durchmesser bringen. Der Plattensitzmantel 24 bildet somit abschnittsweise Plattensitze für die Schneidplatten 18, welche ohne feste Zuordnung wahlweise auf die Plattensitze verteilbar sind. Zweckmäßig werden die vorgefertigten Schneidplatten 18 auf einem Nennmaßhalter positioniert und an ihren Schneidkanten 20 auf einen definierten Durchmesser geschliffen.

Wie aus Fig. 1 weiter ersichtlich, weist der Werkzeughalter 14 eine den Plattensitzmantel 24 umgebende, in einer Radialebene der Werkzeugachse 12 liegende Ringschulter 28 als Bodenstützfläche zur axialen Abstützung der Schneidplatten 18 auf. Nahe deren Schneidkanten 20 sind Spannuten 30 zur Abfuhr von Spänen in den Mantel des Werkzeughalters 14 eingebracht.

Um auch die beim Schneidvorgang auftretenden Drehmomente und Torsionskräfte mitnehmen zu können, sind außerhalb des Plattensitzmantels 24 in der Ringschulter 28 verankerte stiftförmige Widerlager 32 vorgesehen, die als Lagerfläche für eine seitliche Plattenfläche der zugeordneten Schneidplatten 18 wirken.

Für eine exakte Positionshaltung werden die Schneidplatten 18 durch eine Schraubverbindung 34 zugleich gegen den Plattensitzmantel 24, die Ringschulter 28 und das zugeordnete Widerlager 32 gepresst. Die Schraubverbindung 34 umfasst jeweils eine Senkkopfschraube 36, die ein Durchgangsloch 38 der jeweiligen Schneidplatte 18 durchgreift und sich mit einem vorgegebenen axialen Versatz in eine Gewindebohrung in der Ringschulter 28 so einschrauben lässt, dass auch die gewünschten Kraftkomponenten zum seitlichen Anpressen der Schneidplatten 18 gegen den Plattensitzmantel 24 und gegen das zugehörige Widerlager 32 aufgebracht werden.

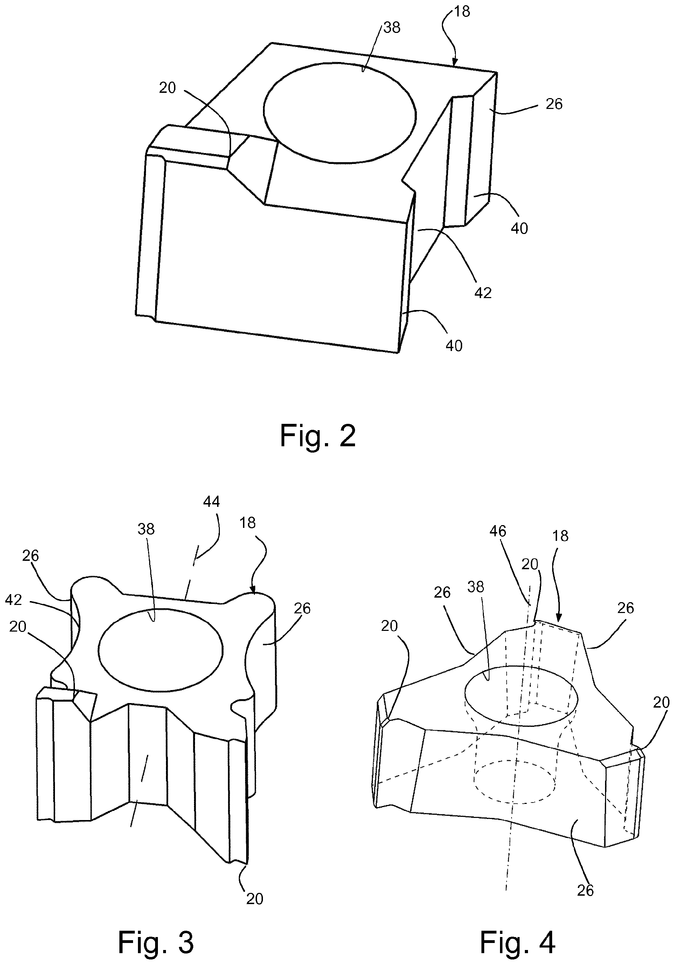

Wie auch aus Fig. 2 ersichtlich, weisen die Schneidplatten 18 an ihrer Anlageseite 26 jeweils zwei durch seitliche Planflächen gebildete seitliche Anlagestellen 40 zur Anlage an dem Plattensitzmantel 24 auf. Die Anlagestellen 40 sind fertigungstechnisch vorteilhaft durch Planflächen gebildet, können aber auch eine konvexe Kontur aufweisen. Im montierten Zustand der Schneidplatten 18 liegen diese Anlagestellen 40 bezüglich der Werkzeugachse 12 in einem Winkelabstand zueinander und verlaufen linienförmig achsparallel, so dass eine eindeutig bestimmte radiale Abstützung erreicht wird. Zu diesem Zweck ist eine parallel zur Werkzeugachse 12 durchgehende zentrale Freisparung 42 zwischen den Anlagestellen 40 eingebracht, die eine konkave, insbesondere nutartige oder rinnenförmige Querschnittskontur besitzt.

Bei den folgenden Ausführungsbeispielen sind gleiche
oder ähnliche Teile mit denselben Bezugszeichen versehen, wie vorstehend beschrieben.

Fig. 3 zeigt ein Ausführungsbeispiel einer zweischneidigen Schneidplatte 18, die als Wendeschneidplatte bezüglich einer quer zu dem Durchgangsloch 38 durchgehenden Symmetrieachse 44 punktsymmetrisch ausgebildet ist. Dabei ist jeweils eine Anlageseite 26 für die beiden Schneidkanten 20 vorgesehen. Die Schneidkanten 20 stehen nach entgegengesetzten Richtungen über die das Durchgangsloch 38 umgebenden Stirnflächen über. Die nicht benutzte zweite Schneidkante 20 kann dabei in einem an den Plattensitzmantel 24 angrenzenden ringförmigen Einstich in der Bodenstützfläche bzw. Ringschulter 28 des Werkzeughalters 14 aufgenommen werden. Soll die zweite Schneidkante 20 zum Einsatz kommen, wird die Schneidplatte 18 gelöst und um 180° um die Symmetrieachse 44 gedreht.

Fig. 4 zeigt eine alternative dreischneidige Schneidplatte 18. Diese besitzt auch drei Anlageseiten 26 und lässt sich für einen Schneidenwechsel um 120° um die Bohrungsachse 46 drehen.

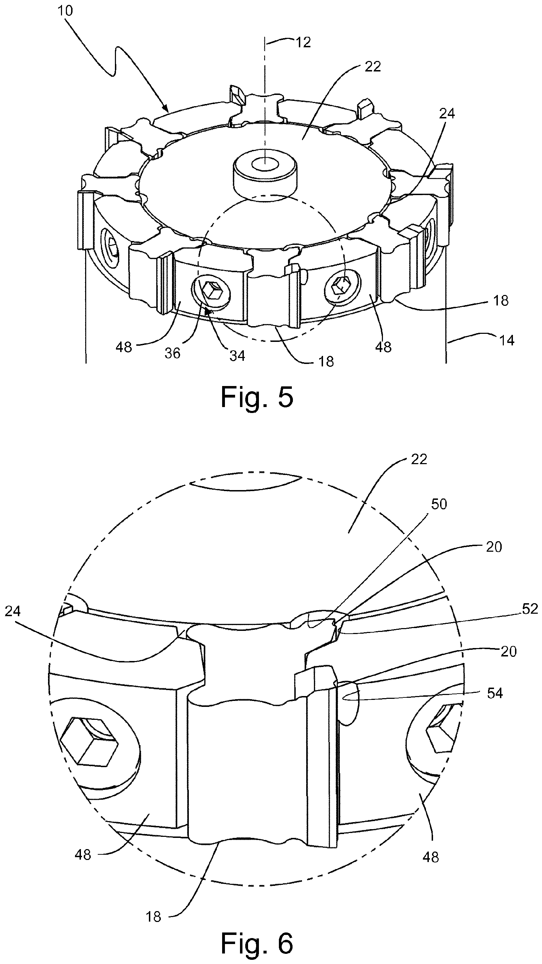

Das in Fig. 5 dargestellte Ausführungsbeispiel eines Reibwerkzeugs 10 unterscheidet sich von dem Beispiel nach Fig. 1 im Wesentlichen dadurch, dass die Schneidplatten 18 ohne Bohrungen ausgeführt und nicht direkt angeschraubt sind, sondern mittelbar durch Klemmstücke 48 gegen den Plattensitzmantel 24 geklemmt sind. Die Klemmstücke 48 sind jeweils durch eine radial in den Stirnfortsatz 22 eingedrehte Schraube 36 festgelegt. Dabei ergänzen sich die in Umfangsrichtung des Plattensitzmantels 24 abwechselnd angeordneten Schneidplatten 18 und Klemmstücke 48 formschlüssig zu einer Ringstruktur, so dass zusätzliche Widerlager (Stifte 32 in Fig. 1) entfallen.

Wie am besten aus Fig. 6 ersichtlich, sind in den Plattensitzmantel 24 axial verlaufende Hohlkehlen 50 eingebracht, die einen Freiraum für eine nicht aktive zweite Schneidkante 20 schaffen. Auch die Klemmstücke 48 können an ihrer mit der Schneidplatte 18 in Eingriff stehenden Spannfläche eine Tasche oder Freisparung 52 zum Schutz der unbenutzten Schneidkante 20 besitzen. Eine zusätzliche Funktionserweiterung kann darin bestehen, dass die Klemmstücke einen im Bereich der aktiven Schneidkante 20 mündenden Kanal 54 zur Kühlmitteldurchführung aufweisen.

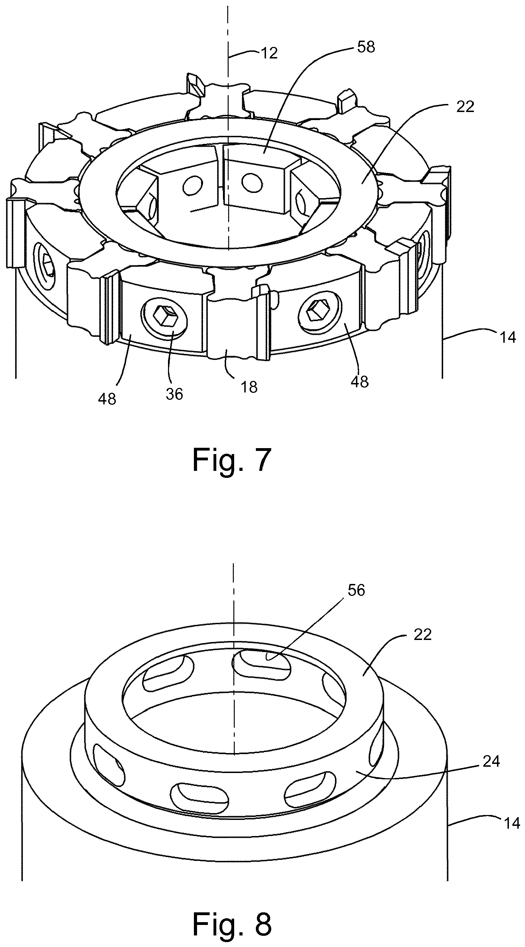

Bei dem in Fig. 7 und 8 gezeigten Ausführungsbeispiel ist der Plattensitzmantel 24 durch einen hohlzylindrischen Ringfortsatz 22 gebildet, der über seinen Umfang mit Langlöchern 56 versehen ist. Auch hier sind Schneidplatten 18 und Klemmstücke 48 in Umfangsrichtung abwechselnd angeordnet. Die Klemmstücke 48 werden allerdings mittels Schraube 36 in jeweils einem Nutenstein 58 an der Innenseite des Ringfortsatzes 22 festgelegt. Dadurch ist die Position der Schneidplatten 18, deren Anzahl sowie die Gleich- bzw. Ungleichteilung weitgehend frei wählbar. Um ungleiche Teilungen der Schneidplatten 18 zu erreichen, können die Längen der Klemmstücke 48 entsprechend variieren.

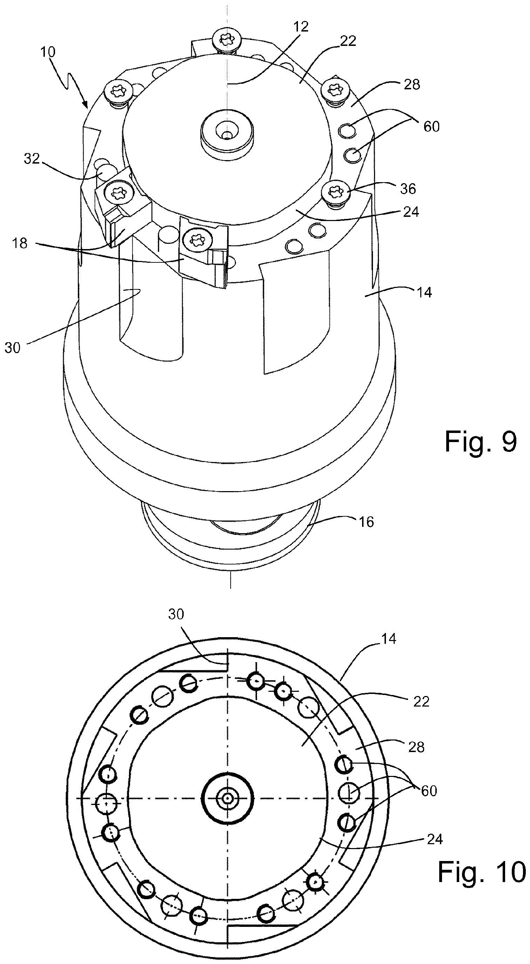

Fig. 9 und 10 zeigen ein Ausführungsbeispiel mit einem abschnittsweise unterschiedlich gekrümmten Plattensitzmantel 24. Die Anzahl dieser Umfangsabschnitte ist abhängig von der vorgesehenen Anzahl der Schneidplatten 18, von denen in Fig. 9 nur zwei beispielhaft gezeigt sind. Durch eine Verschiebung der Schneidplatten 18 an dem Plattensitzmantel 24 entlang können somit unterschiedliche Schneiddurchmesser, vorzugsweise im µm-Bereich, realisiert werden. Weiterhin können durch die Verschiebung Fertigungstoleranzen oder ein Verschleiß der Schneidkanten ausgeglichen werden. Zur Drehmomentmitnahme sind hierfür jeden Plattensitz mehrere Bohrungen 60 in der Ringschulter 28 des Werkzeughalters 14 vorgesehen, in denen die Widerlager 32 und Klemmschrauben 36 wahlweise positionierbar sind.

## Patentansprüche

1. Maschinenwerkzeug, insbesondere Reibwerkzeug zur Feinbearbeitung von Bohrungen, mit einem eine Werkzeugachse (12) aufweisenden, relativ zu einem zu bearbeitenden Werkstück rotierenden Werkzeughalter (14) und mehreren an dem Werkzeughalter (14) wechselbar angebrachten Schneidplatten (18), deren aktive Schneidkanten (20) einen zu der Werkzeugachse (12) koaxialen gemeinsamen Schneidkreis besitzen, wobei der Werkzeughalter (14) einen um die Werkzeugachse (12) umlaufenden Plattensitzmantel (24) zur radialen Positionierung der Schneidplatten (18) aufweist, wobei die Schneidplatten (18) mindestens eine in Anlage mit dem Plattensitzmantel (24) bringbare Anlageseite (26) aufweisen, **dadurch gekennzeichnet, dass** die Schneidplatten (18) an ihren Anlageseiten (26) jeweils zwei bezüglich der Werkzeugachse (12) in einem Winkelabstand voneinander liegende, linienförmige Anlagestellen (40) zur Anlage an dem zylinderartigen Plattensitzmantel (24) aufweisen.

2. Maschinenwerkzeug nach Anspruch 1, **dadurch gekennzeichnet, dass** der Plattensitzmantel (24) die geometrische Form einer allgemeinen Zylinderfläche besitzt, die sich unverzerrt in die Ebene abwickeln lässt.

3. Maschinenwerkzeug nach Anspruch 1 oder 2, **dadurch gekennzeichnet, dass** der Plattensitzmantel (24) eine ungleichmäßig oder gleichmäßig gekrümmte, vorzugsweise kreisförmige Ringkontur aufweist.

4. Maschinenwerkzeug nach einem der Ansprüche 1 bis 3, **dadurch gekennzeichnet, dass** der Plattensitzmantel (24) als Schlifffläche vorzugsweise durch Rundschleifen gebildet ist.

5. Maschinenwerkzeug nach einem der Ansprüche 1 bis 4, **dadurch gekennzeichnet, dass** der Plattensitzmantel (24) eine Mehrzahl von über seinen Umfang verteilte Plattensitze für die Schneidplatten (18) bildet, wobei die Schneidplatten (18) ohne feste Zuordnung auf die Plattensitze wahlweise verteilbar sind.

6. Maschinenwerkzeug nach einem der Ansprüche 1 bis 5, **dadurch gekennzeichnet, dass** die Schneidplatten (18) mit ihren Schneidkanten (20) gesondert von dem Werkzeughalter (14) gefertigt sind.

7. Maschinenwerkzeug nach einem der Ansprüche 1 bis 6, **dadurch gekennzeichnet, dass** die Schneidplatten (18) jeweils mehrere Schneidkanten (20) aufweisen.

8. Maschinenwerkzeug nach einem der Ansprüche 1 bis 7, **dadurch gekennzeichnet, dass** die Schneidplatten (18) unter der Kraft einer Schraubverbindung (34) gegen den Plattensitzmantel (24) gepresst sind.

9. Maschinenwerkzeug nach Anspruch 8, **dadurch gekennzeichnet, dass** zumindest eine Kraftkomponente der Schraubverbindung (34) durch einen axialen Versatz zwischen einem Schraubenloch und einem Schraubgewinde einer Klemmschraube (36) gebildet ist.

10. Maschinenwerkzeug nach einem der Ansprüche 1 bis 9, **dadurch gekennzeichnet, dass** die Schneidplatten (18) jeweils mittels einer Klemmschraube (36) direkt an dem Werkzeughalter (14) angeschraubt sind.

11. Maschinenwerkzeug nach einem der Ansprüche 1 bis 10, **dadurch gekennzeichnet, dass** die Schneidplatten (18) durch an dem Werkzeughalter (14) angeschraubte Klemmstücke (48) gegen den Plattensitzmantel (24) geklemmt sind.

12. Maschinenwerkzeug nach einem der Ansprüche 1 bis 11, **dadurch gekennzeichnet, dass** die Schneidplatten (18) an ihren Anlageseiten (26) jeweils eine parallel zur Werkzeugachse (12) verlaufende, insbesondere nutartige Freisparung (42) aufweisen.

13. Maschinenwerkzeug nach einem der Ansprüche 1 bis 12, **dadurch gekennzeichnet, dass** die Schneidplatten (18) an jeweils mindestens einem an dem Werkzeughalter (14) verankerten oder ausgebildeten Widerlager (32) außerhalb des Plattensitzmantels (24) zur Mitnahme von Drehmomenten zusätzlich abgestützt sind.

14. Maschinenwerkzeug nach einem der Ansprüche 1 bis 13, **dadurch gekennzeichnet, dass** der Werkzeughalter (14) eine den Plattensitzmantel (24) umgebende, in einer Radialebene der Werkzeugachse (12) liegende Ringschulter (28) zur axialen Abstützung der Schneidplatten (18) aufweist.

15. Maschinenwerkzeug nach einem der Ansprüche 1 bis 14, **dadurch gekennzeichnet, dass** der Plattensitzmantel (24) durch einen zylindrischen oder hohlzylindrischen Stirnfortsatz (22) des Werkzeughalters (14) gebildet ist.

## Claims

1. A machine tool, in particular reaming tool for the fine machining of bores, comprising a tool holder (14) which rotates relative to a workpiece to be machined and having a tool axis (12), and a plurality of cutting inserts (18) that are removably attached to the tool holder (14), the active cutting edges (20) of said cutting inserts having a common cutting circle which is coaxial to the tool axis (12), wherein the tool holder (14) has an insert seat shell (24) for radially positioning the cutting inserts (18), said insert seat shell extending circumferentially around the tool axis (12), wherein the cutting inserts (18) have at least one contact surface (26) that can be brought into contact with the insert seat shell (24), **characterized in that** the cutting inserts (18) are provided on their contact surfaces (26) with respective two linear contact sites (40) for abutting on the cylinder-type insert seat shell (24), which are separated from each other by an angular distance with respect to the tool axis (12).

2. The machine tool of claim 1, **characterized in that** the insert seat shell (24) has the geometrical form of a general cylindrical surface, which may be unfolded in a plane without distortions.

3. The machine tool of claim 1 or 2, **characterized in that** the insert seat shell (24) has an irregular or regularly curved, preferably circular annular contour.

4. The machine tool of any of claims 1 to 3, **characterized in that** the insert seat shell (24) is formed by a grinding surface, preferably by round grinding.

5. The machine tool of any of claims 1 to 4, **characterized in that** the insert seat shell (24) forms a plurality of insert seats for the cutting inserts (18), which are distributed over its circumference, wherein the cutting inserts (18) may be selectively distributed without a fixed association onto the insert seats.

6. The machine tool of any of claims 1 to 5, **characterized in that** the cutting inserts (18) are separately manufactured from the tool holder (14) with their respective cutting edges (20).

7. The machine tool of any of claims 1 to 6, **characterized in that** the cutting inserts (18) respectively have a plurality of cutting edges (20).

8. The machine tool of any of claim 1 to 7, **characterized in that** the cutting inserts (18) are pressed by the force of a screwed connection (34) against the insert seat shell (24).

9. The machine tool of claim 8, **characterized in that** at least one force component of the screwed connection (34) is formed by an axial offset between the screw hole and a screw thread of a clamping screw (36).

10. The machine tool of any of claims 1 to 9, **characterized in that** the cutting inserts (18) are screwed directly to the tool holder (14) by respective one clamping screw (36).

11. The machine tool of any of claims 1 to 10, **characterized in that** the cutting inserts (18) are clamped against the insert seat shell (24) by clamping elements (48) screwed to the tool holder (14).

12. The machine tool of any of claims 1 to 11, **characterized in that** the cutting inserts (18) are provided, on their contact surfaces (26) with a respective in particular groove-like recess (42) which is parallel to the tool axis (12).

13. The machine tool of any of claims 1 to 12, **characterized in that** the cutting inserts (18) are additionally supported outside the insert seat shell (24) on at least one respective shoulder (32) which is anchored or formed on the tool holder (14) for transmitting torques.

14. The machine tool of any of claims 1 to 13, **characterized in that** the tool holder (14) has an annular shoulder (28) surrounding the insert seat shell (24) and disposed in a radial plane of the tool axis (12), for axially supporting the cutting inserts (18).

15. The machine tool of any of claims 1 to 14, **characterized in that** the insert seat shell (24) is formed by a cylindrical or hollow cylindrical front extension (22) of the tool holder (14).

## Revendications

1. Machine-outil, en particulier alésoir pour l'usinage fin de trous comprenant un porte-outil (14) qui présente un axe d'outil (12) et tourne par rapport à une pièce à usiner, et une pluralité de plaquettes de coupe (18) qui sont disposées alternativement sur le porte-outil (14) et dont les arêtes de coupe (20) actives présentent un cercle de coupe commun coaxial avec l'axe de l'outil (12), le porte-outil (14) présentant une surface latérale (24) formant siège pour la plaquette et tournant autour de l'axe de l'outil (12) pour le positionnement radial des plaquettes de coupe (18), les plaquettes de coupe (18) présentant au moins une face d'appui (26) qui peut être mise en contact avec la surface latérale (24) formant siège pour la plaquette, **caractérisée en ce que** les plaquettes de coupe (18) présentent chacune, sur leurs faces d'appui (26), deux points de contact (40) linéaires qui sont à une distance angulaire l'un de l'autre par rapport à l'axe de l'outil (12) pour la mise en contact sur la surface latérale (24) cylindrique formant siège pour la plaquette.

2. Machine-outil selon la revendication 1, **caractérisée en ce que** la surface latérale (24) formant siège pour la plaquette a la forme géométrique d'une surface généralement cylindrique qui peut être déroulée dans le plan sans être déformée.

3. Machine-outil selon les revendications 1 ou 2, **caractérisée en ce que** la surface latérale (24) formant siège pour la plaquette présente un contour annulaire non uniformément ou uniformément incurvé, de préférence circulaire.

4. Machine-outil selon l'une quelconque des revendications 1 à 3, **caractérisée en ce que** la surface latérale (24) formant siège pour la plaquette est formée sous la forme d'une surface polie, de préférence par rectification cylindrique.

5. Machine-outil selon l'une quelconque des revendications 1 à 4, **caractérisée en ce que** la surface latérale (24) formant siège pour la plaquette forme une pluralité de sièges de plaquettes répartis sur sa circonférence pour les plaquettes de coupe (18), les plaquettes de coupe (18) pouvant être réparties sélectivement sur les sièges de plaquettes sans attribution fixe.

6. Machine-outil selon l'une quelconque des revendications 1 à 5, **caractérisée en ce que** les plaquettes de coupe (18) avec leurs arêtes de coupe (20) sont réalisées séparément du porte-outil (14).

7. Machine-outil selon l'une quelconque des revendications 1 à 6, **caractérisée en ce que** les plaquettes de coupe (18) présentent chacune plusieurs arêtes de coupe (20).

8. Machine-outil selon l'une quelconque des revendications 1 à 7, **caractérisée en ce que** les plaquettes de coupe (18) sont appuyées contre la surface latérale (24) formant siège pour la plaquette sous la force d'un raccord à vis (34).

9. Machine-outil selon la revendication 8, **caractérisée en ce qu'**au moins une composante de force du raccord à vis (34) est formée par un décalage axial entre un trou de vis et un filetage d'une vis de serrage (36).

10. Machine-outil selon l'une quelconque des revendications 1 à 9, **caractérisée en ce que** les plaquettes de coupe (18) sont chacune vissées directement sur le porte-outil (14) au moyen d'une vis de serrage (36).

11. Machine-outil selon l'une quelconque des revendications 1 à 10, **caractérisée en ce que** les plaquettes de coupe (18) sont serrées contre la surface latérale (24) formant siège pour la plaquette par des pièces de serrage (48) vissées sur le porte-outil (14).

12. Machine-outil selon l'une quelconque des revendications 1 à 11, **caractérisée en ce que** les plaquettes de coupe (18) présentent chacune, sur leurs faces d'appui (26), un évidement, notamment en forme de rainure (42), parallèle à l'axe de l'outil (12).

13. Machine-outil selon l'une quelconque des revendications 1 à 12, **caractérisée en ce que** les plaquettes de coupe (18) sont soutenues en outre sur au moins un palier de butée (32) ancré ou formé sur le porte-outil (14) à l'extérieur de la surface latérale (24) formant siège pour la plaquette pour transmettre des couples.

14. Machine-outil selon l'une quelconque des revendications 1 à 13, **caractérisée en ce que** le porte-outil (14) présente un épaulement annulaire (28) entourant la surface latérale (24) formant siège pour la plaquette et se trouvant dans un plan radial de l'axe d'outil (12) pour soutenir axialement les plaquettes de coupe (18).

15. Machine-outil selon l'une quelconque des revendications 1 à 14, **caractérisée en ce que** la surface latérale (24) formant siège pour la plaquette est formée par une extension d'extrémité cylindrique ou cylindrique creuse (22) du porte-outil (14).
